# EUROPÄISCHE PATENTSCHRIFT

(11) **EP 2 318 250 B1**
(45) Veröffentlichungstag und Bekanntmachung des Hinweises auf die Patenterteilung: **16.10.2013**
(21) Anmeldenummer: 09781737.3
(22) Anmeldetag: 12.08.2009
(51) Int. Cl.: B60W 30/18, B60W 20/00, B60W 10/10, B60W 10/02, B60W 10/08, B60K 6/547, B60K 6/48

(54) **VERFAHREN ZUM BETREIBEN EINER HYBRIDANTRIEBSVORRICHTUNG EINES KRAFTFAHRZEUGS SOWIE HYBRIDANTRIEBSVORRICHTUNG UND ELEKTRONISCHES STEUERGERÄT**
METHOD FOR OPERATING A HYBRID DRIVE DEVICE OF A MOTOR VEHICLE AND HYBRID DRIVE DEVICE AND ELECTRONIC CONTROLLER
PROCÉDÉ DE FONCTIONNEMENT D'UN SYSTÈME DE PROPULSION HYBRIDE D'UN VÉHICULE AUTOMOBILE AINSI QUE SYSTÈME DE PROPULSION HYBRIDE ET APPAREIL ÉLECTRONIQUE DE COMMANDE

(30) Priorität: 26.08.2008 DE 102008041565
(43) Veröffentlichungstag der Anmeldung: 11.05.2011
(73) Patentinhaber: Robert Bosch GmbH, 70442 Stuttgart (DE)
(72) Erfinder: FALKENSTEIN, Jens-Werner, 73434 Aalen (DE); SCHLIPF, Thomas, 71579 Spiegelberg-Vorderbuechelberg (DE); GLORA, Michael, 71706 Markgroeningen (DE)
(86) Internationale Anmeldenummer: PCT/EP2009/060420
(87) Internationale Veröffentlichungsnummer: WO 2010/026022

(56) Entgegenhaltungen:
- EP-A- 1 717 084
- EP-B- 0 952 932
- EP-B- 1 127 230
- DE-A- 10 133 695
- DE-A- 19 945 473
- DE-A-102005 032 196
- DE-A-102005 048 938
- FR-A- 2 907 409

## Beschreibung

Die Erfindung betrifft ein Verfahren zum Betreiben einer Hybridantriebsvorrichtung eines Kraftfahrzeugs, die zumindest zwei unterschiedliche Antriebsaggregate, insbesondere eine elektrische Maschine und eine Brennkraftmaschine, aufweist, die mit wenigstens zwei Antriebssträngen des Kraftfahrzeugs verbindbar sind. Ferner umfasst die Erfindung eine Hybridantriebsvorrichtung und ein elektronisches Steuergerät.

### Stand der Technik

Verfahren der eingangs genannten Art sind bekannt. Ein Beispiel für die beschriebene Hybridantriebsvorrichtung wird als "Torque-Split"-Hybrid bezeichnet. Dabei ist ein Doppelgetriebe mit einem ersten und einem zweiten Antriebsstrang und einem dem Antrieb des Kraftfahrzeugs dienenden Abtriebsstrang vorgehen, wobei eines der Antriebsaggregate an den ersten oder den zweiten Antriebsstrang koppelbar ist und ein weiteres der Antriebsaggregate über eine erste Kupplung mit dem ersten Antriebsstrang und/oder über eine zweite Kupplung mit dem zweiten Antriebsstrang verbindbar ist. Diese Ausbildung ist vorteilhaft, da die unterschiedlichen Antriebsaggregate mit unterschiedlichen Drehzahlen und damit jeweils mit optimalem Wirkungsgrad betrieben werden können. Ein weiterer Vorteil ist, dass keine Veränderungen an dem Antriebsstrang des Kraftfahrzeugs, der mit dem Abtriebsstrang der Hybridantriebsvorrichtung verbunden ist, vorgenommen werden müssen. Das Kraftfahrzeug kann also zunächst mit einem konventionellen Antrieb, beispielsweise basierend auf einer Verbrennungskraftmaschine, ausgestattet werden und später auf eine Hybridantriebsvorrichtung mit zumindest zwei unterschieldlinchen Antriebsaggregaten umgerüstet werden. Durch die Verbindung des einen Antriebsaggregats mit dem ersten oder dem zweiten Antriebsstrang sind unterschiedliche Übersetzungen für das eine Antriebsaggregat wählbar. Damit lässt sich diese in einem optimalen Betriebsbereich betreiben und bei Bedarf abkoppeln. Daraus ergibt sich im Vergleich zu dem in der DE 199 03 936 A1 beschriebenen Getriebe der Vorteil, dass die Hybridantriebsvorrichtung bereits mit zwei Antriebsaggregaten realisierbar ist. Das bedeutet, dass die Betriebsmodi "Boost", "Rekuperation" und ein Antrieb lediglich mit dem einen Antriebsaggregat möglich sind. Zudem werden keine komplexen Komponenten, beispielsweise elektrische Komponenten oder Umlaufgetriebe, benötigt. Das in der genannten Veröffentlichung beschriebene Verfahren zum Betreiben einer Hybridantriebsvorrichtung eines Kraftfahrzeugs weist jedoch das Problem auf, dass ein Umschalten des einen Antriebsaggregats zwischen dem ersten und dem zweiten beziehungsweise dem zweiten und dem ersten Antriebsstrang zu einer kurzfristigen Unterbrechung eines Antriebs- beziehungsweise Verzögerungsmoments führt, welches sich negativ auf den Komfort eines Fahrers des Kraftfahrzeugs auswirkt.

Als Stand der Technik ist beispielsweise die DE 199 45 473 A1 bekannt, welche ein Getriebe mit zumindest zwei Wellen, einer Mehrzahl von Zahnradpaaren und einer Elektromaschine betrifft, die mittels zumindest einer Kupplung zumindest einer der Wellen zuschaltbar ist. Die EP 0 952 932 B1 beschreibt eine Steuerung für Fahrzeuge mit Hybridantrieb. Weiterhin betrifft die EP 1 127 230 B1 ein Getriebe für ein Kraftfahrzeug und ein Verfahren zum Betreiben des Getriebes. Das Getriebe weist wenigstens zwei Getriebeeingangswellen und wenigstens eine Getriebeausgangswelle sowie mehrere, unterschiedliche Übersetzungen zwischen den wenigstens zwei Getriebeeingangswellen und der wenigstens einen Getriebeausgangswelle ausbildenden Zahnradpaare auf. Weiterhin sind zwei, den Verbrennungsmotor des Kraftfahrzeugs mit der wenigstens einen Ausgangswelle kraftschlüssig verbindende Kupplungseinrichtungen vorgesehen. Dabei soll wenigstens eine der Getriebeeingangswellen mit wenigstens einer Elektromaschine zumindest koppelbar sein und die wenigstens eine Elektromaschine zum Starten des Verbrennungsmotors des Kraftfahrzeugs wenigstens eine der Getriebeeingangswellen, welche mit dem Verbrennungsmotor kraftschlüssig verbunden ist, antreiben und zum Rückwärtsfahren des Kraftfahrzeugs bei getrennten Kupplungseinrichtungen wenigstens eine der Getriebeausgangswellen antreiben. Schließlich zeigt die DE 101 33 695 A1 ein Getriebe mit einer Mehrzahl von Wellen wie einer ersten, zumindest einteiligen und einer zweiten, zumindest einteiligen Getriebeeingangswelle und zumindest einer Getriebeausgangswelle. Das Getriebe soll die Kombination der folgenden Merkmale aufweisen: Zwischen der Getriebeausgangswelle und den Getriebeeingangswellen ist eine Vielzahl von Zahnradpaaren, bestehend aus je einem um eine der Wellen angeordneten, mit dieser drehfest verbindbaren Losrad und einem mit diesem kämmenden, auf einer hierzu korrespondierenden Welle drehfest angeordneten Festrad zur Bildung von Gängen mit verschiedenen Übersetzungsstufen zwischen der Getriebeausgangswelle und jeweils einer der Getriebeeingangswellen angeordnet; zumindest eine Getriebeeingangswelle ist mittels einer Antriebseinheit mit einer Antriebswelle zumindest zeitweise antreibbar; zumindest eine Getriebeeingangswelle ist mit einer ersten Elektromaschine verbindbar; die Getriebeausgangswelle ist mit zumindest einem Antriebsrad verbindbar; zumindest ein Gang ist automatisch mittels zumindest eines Aktors schaltbar.

### Offenbarung der Erfindung

Demgegenüber weist das Verfahren mit den in Anspruch 1 genannten Merkmalen den Vorteil auf, dass ein Umschalten ohne Unterbrechung des Antriebs- beziehungsweise Abtriebsmoments des einen Antriebsaggregats erfolgt. Dies wird erreicht, indem während eines Umkoppelns eines der Antriebsaggregate, insbesondere von einem ersten auf einen zweiten der Antriebsstränge oder von dem zweiten auf den ersten Antriebsstrang, und/oder während einer Synchronisation ein dem von dem einen Antriebsaggregat erzeugten Moment im Wesentlichen entsprechendes Ersatzmoment durch zumindest teilweises Schließen einer Kupplung von dem weiteren Antriebsaggregat bereitgestellt wird. Erfindungsgemäß sind mindestens zwei Antriebsaggregate vorgesehen. Diese können mit wenigstens zwei Antriebssträngen des Kraftfahrzeugs verbunden sein, die dem Antrieb des Kraftfahrzeugs dienen. Dabei kann vorgesehen sein, dass die Antriebsstränge über mindestens ein Getriebe mit Achsen des Kraftfahrzeugs verbunden sind. Beispielsweise kann jeder Antriebsstrang ein Getriebe aufweisen oder zwei der Antriebsstränge an ein Doppelgetriebe angeschlossen sein, dessen Abtriebsstrang mit den Achsen wirkverbunden ist. Soll das eine Antriebsaggregat umgekoppelt beziehungsweise kurzzeitig ausgekoppelt werden, beispielsweise während eines Schaltvorgangs und/oder Synchronisationsvorgangs, so entfällt das von dem einen Antriebsaggregat erzeugte Moment und steht für den Antrieb des Kraftfahrzeugs nicht mehr zur Verfügung. In diesem Fall wird durch zumindest teilweises Schließen der Kupplung ein Ersatzmoment bereitgestellt, welches im Wesentlichen dem Moment des einen Antriebsaggregats entspricht. Auf diese Weise kann ein kontinuierliches und/oder stetes Moment für den Antrieb des Kraftfahrzeugs verfügbar sein, so dass keinerlei Komfort- und/oder Sicherheitseinbußen für Insassen des Kraftfahrzeugs auftreten können. Während der Synchronisation ist das eine Antriebsaggregat von dem entsprechenden Antriebsstrang abgetrennt, um eine Drehzahlanpassung, beispielsweise nach einem Doppelschaltvorgang, also einem Schaltvorgang, bei welchem mindestens ein Gang übersprungen wird, zu erreichen.

Eine Weiterbildung der Erfindung sieht ein Doppelgetriebe vor, welches den ersten und den zweiten Antriebsstrang und einen dem Antrieb des Kraftfahrzeugs dienenden Abtriebsstrang aufweist. Es sind mindestens zwei unterschiedliche Antriebsaggregate und ein Doppelgetriebe vorgesehen. Das Doppelgetriebe weist einen ersten und einen zweiten Antriebsstrang auf, die über Getriebevorrichtungen des Doppelgetriebes mit einem Abtriebsstrang des Doppelgetriebes verbunden sind. Dabei weist das Doppelgetriebe auf dem ersten Antriebsstrang mindestens eine erste Übersetzung und auf dem zweiten Antriebsstrang mindestens eine von der ersten Übersetzung verschiedene Übersetzungen auf. Beispielsweise können auf dem ersten Antriebsstrang die den Gängen 1, 3, 5 und 7 sowie einem Rückwärtsgang zugeordnete Übersetzungen angeordnet sein, während der zweite Antriebsstrang Übersetzungen für die Gänge 2, 4 und 6 aufweist. Der Abtriebsstrang kann beispielsweise mit mindestens einer Achse des Kraftfahrzeugs verbunden sein. Das Doppelgetriebe weist also eingangsseitig den ersten und den zweiten Antriebsstrang und ausgangsseitig den Abtriebsstrang auf.

Eine Weiterbildung der Erfindung sieht vor, dass das eine Antriebsaggregat dem ersten Antriebsstrang und das weitere Antriebsaggregat dem zweiten Antriebsstrang zugeordnet ist. Es kann vorgesehen sein, dass jedes der Antriebsaggregate einem anderen Antriebsstrang beziehungsweise einer anderen Welle zugeordnet ist. Auf diese Weise kann eine Kopplung zwischen den Antriebsaggregaten über einen Untergrund des Kraftfahrzeugs erfolgen, welcher mit dessen Rädern in Kontakt steht. Diese Ausbildung einer Hybridantriebsvorrichtung wird als "Through the road"-Hybrid bezeichnet.

Eine Weiterbildung der Erfindung sieht vor, dass das eine Antriebsaggregat an den ersten oder den zweiten Antriebsstrang koppelbar ist. Das eine Antriebsaggregat ist beispielsweise mittels einer Klauenkupplung mit dem ersten oder dem zweiten Antriebsstrang koppelbar. Das bedeutet, dass zum Umkoppeln des einen Antriebsaggregats von dem ersten auf den zweiten Antriebsstrang oder umgekehrt das eine Antriebsaggregat zunächst von dem ersten oder dem zweiten Antriebsstrang entkoppelt wird und anschließend an den zweiten oder ersten Antriebsstrang angekoppelt wird. Während dem Umkoppeln erfolgt also keine Drehmomentübertragung von dem einen Antriebsaggregat an den ersten oder zweiten Antriebsstrang. Es kann auch vorgesehen sein, dass das eine Antriebsaggregat dauerhaft von dem ersten und dem zweiten Antriebsstrang entkoppelt wird. In diesem Fall ist beispielsweise ein reiner Betrieb mittels des weiteren Antriebsaggregats möglich.

Eine Weiterbildung der Erfindung sieht vor, dass das weitere Antriebsaggregat über eine erste Kupplung mit dem ersten Antriebsstrang und/oder über eine zweite Kupplung mit dem zweiten Antriebsstrang verbindbar ist. Das weitere Antriebsaggregat ist über die erste Kupplung mit dem ersten Antriebsstrang und/oder über die zweite Kupplung mit dem zweiten Antriebsstrang verbindbar. Eine Drehmomentübertragung erfolgt also von dem weiteren Antriebsaggregat beispielsweise sowohl auf die erste als auch auf die zweite Kupplung, wobei wahlweise die erste Kupplung und/oder die zweite Kupplung geschlossen wird und somit das Drehmoment in den ersten und/oder zweiten Antriebsstrang einleitet. Es ist beispielsweise vorgesehen, dass die erste Kupplung geöffnet und die zweite Kupplung geschlossen ist, die Übertragung des Drehmoments von dem weiteren Antriebsaggregat auf den Abtriebsstrang also über den ersten Antriebsstrang erfolgt. Ist ein Doppelgetriebe verbaut und soll ein Wechsel der Übersetzung erfolgen, so wird die gewünschte Übersetzung für den zweiten Antriebsstrang des Doppelgetriebes eingestellt. Der Gangwechsel erfolgt nun, indem die erste Kupplung geöffnet und im Wesentlichen gleichzeitig die zweite Kupplung geschlossen wird. Auf diese Weise ist ein Wechsel der Übersetzung ohne Unterbrechung der Drehmomenteinleitung von dem weiteren Antriebsaggregat an den Abtriebsstrang möglich. Es kann auch vorgesehen sein, dass die erste Kupplung und die zweite Kupplung kurzzeitig gleichzeitig geschlossen sind, das heißt, dass ein Öffnen der ersten Kupplung erst erfolgt, sobald die zweite Kupplung vollständig geschlossen ist. Es kann auch vorgesehen sein, die erste und/oder die zweite Kupplung nur teilweise zu schließen, sodass sich diese in einem Schlupfbetrieb befindet/befinden und nur eine teilweise Übertragung des Drehmoments von dem weiteren Antriebsaggregat auf den Antriebsstrang erfolgt. Es ist also möglich, das Drehmoment des weiteren Antriebsaggregats auch bei einem Wechsel der Übersetzung unterbrechungsfrei an den Abtriebsstrang weiterzuleiten, während dies bei dem ersten Antriebsaggregat nicht der Fall ist.

Eine Weiterbildung der Erfindung sieht vor, dass das Ersatzmoment durch zumindest teilweises Schließen der ersten und/oder zweiten Kupplung bereitgestellt wird. Erfolgt ein Betrieb des Kraftfahrzeugs mit dem einen Antriebsaggregat und soll ein Wechsel der Übersetzung erfolgen, so findet stets eine kurze Unterbrechung der Drehmomentübertragung von dem einen Antriebsaggregat auf den Abtriebsstrang vor. Dies wirkt sich negativ auf den Komfort des Fahrers des Kraftfahrzeugs aus, da während einer Beschleunigung oder einer Verzögerung des Kraftfahrzeugs das Vortriebs- beziehungsweise Verzögerungsmoment kurzfristig entfällt. Dies wird verhindert, indem von dem weiteren Antriebsaggregat ein Ersatzmoment bereitgestellt wird, welches den von dem einen Antriebsaggregat erzeugten Moment im Wesentlichen entspricht. Dieses wird durch teilweises Schließen der ersten und/oder zweiten Kupplung in das Doppelgetriebe beziehungsweise in den ersten und/oder zweiten Antriebsstrang eingeleitet. Dabei kann die erste und/oder zweite Kupplung auch nur teilweise geschlossen werden. Das bedeutet, dass nur ein Teil des von dem weiteren Antriebsaggregat bereitgestellten Moments als Ersatzmoment verwendet wird, und die erste und/oder zweite Kupplung sich in einem Schlupfbetrieb befindet. Beispielsweise kann es bei einer Verzögerung des Kraftfahrzeugs und abgeschaltetem weiteren Antriebsaggregat der Fall sein, dass das von dem weiteren Antriebsaggregat bereitgestellte Verzögerungsmoment größer ist als das benötigte Ersatzmoment. In diesem Fall soll lediglich ein Teil des Moments als Ersatzmoment verwendet werden.

Eine Weiterbildung der Erfindung sieht vor, dass es während einer Verzögerung des Kraftfahrzeugs mittels eines durch das eine Antriebsaggregat erzeugten Bremsmoments eingesetzt wird, wodurch das Moment dem Bremsmoment und das dem Moment entsprechende Ersatzmoment einem Ersatzbremsmoment entspricht. Während des Verzögerns des Kraftfahrzeugs erzeugt das eine Antriebsaggregat ein Bremsmoment, welches über das Doppelgetriebe an den Abtriebsstrang geleitet ist. Während eines Übersetzungswechsels, also beispielsweise das Einlegen eines niedrigeren Ganges, muss das eine Antriebsaggregat von dem ersten auf den zweiten oder von dem zweiten auf den ersten Antriebsstrang umgekoppelt werden. Während dies erfolgt, entfällt kurzzeitig das Bremsmoment des einen Antriebsaggregats und das Bremsmoment muss durch ein von dem weiteren Antriebsaggregat bereitgestelltes Ersatzbremsmoment ersetzt werden. In diesem Fall entspricht das Moment dem Bremsmoment und das Ersatzmoment dem Ersatzbremsmoment.

Eine Weiterbildung der Erfindung sieht vor, dass das weitere Antriebsaggregat das Ersatzbremsmoment mittels Motorbremsen, Motorstaubremsen und/oder Dekompressionsbremsen erzeugt. Das Ersatzbremsmoment kann von dem weiteren Antriebsaggregat also auf verschiedene Weise erzeugt werden. Möglich ist beispielsweise das Motorbremsen, bei welchem das Ersatzbremsmoment durch einen Schleppbetrieb, also innere Reibungskräfte, des weiteren Antriebsaggregats bereitgestellt wird. Ebenso möglich ist das Motorstaubremsen, bei welchem ein Abgasstrang des weiteren Antriebsaggregats unterbrochen wird, sodass das Abgas nicht mehr in die Umgebung gelangen kann. Damit baut sich im Inneren des Antriebsaggregats ein Druck auf, welcher einer Drehung des Antriebsaggregats entgegenwirkt, womit dieses das Ersatzbremsmoment erzeugt. Eine weitere Möglichkeit das Ersatzbremsmoment zu erzeugen ist das Dekompressionsbremsen. Bei diesem wird, sobald ein Kolben in einem Zylinder des weiteren Antriebsaggregats einen oberen Totpunkt erreicht hat, die in dem Inneren befindliche Luft also maximal komprimiert hat, ein Ventil geöffnet, sodass die komprimierte Luft aus dem Zylinder entweichen kann. Auf diese Weise wird die in der Luft gespeicherte Energie vernichtet, womit durch den nunmehr fehlenden Druck der Kolben des Zylinders nicht mehr in Richtung des unteren Totpunkts gedrückt werden kann. Es ist natürlich ebenso möglich, eine mechanische Bremse vorzusehen, um das Ersatzbremsmoment zu erzeugen.

Eine Weiterbildung der Erfindung sieht vor, dass das Ersatzmoment über das teilweise Schließen der ersten und/oder zweiten Kupplung und vorzugsweise durch Ansteuerung des weiteren Antriebsaggregats eingestellt wird. Über das teilweise Schließen der ersten und/oder zweiten Kupplung kann das Niveau des Ersatzmoments eingestellt werden. Sind die Kupplungen nur teilweise geschlossen, so liegt ein Schlupfbetrieb vor und die Kupplungen leiten nicht das vollständige von dem weiteren Antriebsaggregat gelieferte Moment, sondern lediglich einen Teil davon als Ersatzmoment an den ersten und/oder zweiten Antriebsstrang weiter. Vorzugsweise wird das Ersatzmoment durch Ansteuerung des weiteren Antriebsaggregats eingestellt. Beispielsweise kann das Ersatzmoment mittels Motorbremsen, Motorstaubremsen oder Dekompressionsbremsen durch das weitere Antriebsaggregat zur Verfügung gestellt werden. Wird das Ersatzmoment durch Ansteuerung des weiteren Antriebsaggregats eingestellt, so kann die erste und/oder zweite Kupplung vollständig geschlossen sein. Es kann aber auch vorgesehen sein, das Ersatzmoment über eine Kombination aus teilweisem Schließen der ersten und/oder zweiten Kupplung und Ansteuerung des weiteren Antriebsaggregats einzustellen. Durch das Einstellen wird das Ersatzmoment im Wesentlichen auf das von dem einen Antriebsaggregat erzeugte Moment eingestellt, dieses also möglichst durch das Ersatzmoment nachgebildet.

Eine Welterbildung der Erfindung sieht vor, dass als das eine Antriebsaggregat die elektrische Maschine verwendet wird. Die elektrische Maschine kann also an den ersten oder den zweiten Antriebsstrang gekoppelt werden und beispielsweise als Antriebsmotor und/oder als Generator, beispielsweise in einem Rekuperationsbetrieb, dienen.

Eine Weiterbildung der Erfindung sieht vor, dass die elektrische Maschine zum Erzeugen des Bremsmoments als Generator betrieben wird. Dieser Betrieb wird auch als Rekuperationsbetrieb bezeichnet. Das bedeutet, dass das Verzögerungsmoment zumindest zu einem Teil, insbesondere vollständig, von der elektrischen Maschine zur Verfügung gestellt wird. Es kann jedoch auch vorgesehen sein, dass zusätzlich weitere Bremsmittel, beispielsweise eine mechanische Bremse, vorhanden sind und zur Unterstützung der elektrischen Maschine dienen. Im Rekuperationsbetrieb wird die elektrische Maschine auf ein gewünschtes beziehungsweise vorgegebenes Bremsmoment eingestellt und wird folglich in einem Generatorbetrieb verwendet. Die von dem Generator erzeugte elektrische Energie kann in ein Bordnetz des Kraftfahrzeugs eingespeist werden oder in einem Akkumulator zur späteren Verwendung gespeichert werden.

Eine Weiterbildung der Erfindung sieht vor, dass ein an dem ersten oder zweiten Antriebsstrang und/oder an dem Abtriebsstrang anliegendes Drehmoment während des Umkoppelns stets ein Bremsmoment oder ein Vortriebsmoment darstellt. Es soll also während des Verzögerns des Kraftfahrzeugs stets ein Bremsmoment an dem ersten und/oder zweiten Antriebsstrang und/oder dem Abtriebsstrang vorliegen beziehungsweise während des Beschleunigens des Kraftfahrzeugs ein Vortriebsmoment. Dieser Zustand soll während des gesamten Zeitraums eingehalten werden, in welchem das Umkoppeln erfolgt. Auf diese Weise kann eine Anregung von Schwingungen in dem ersten und/oder zweiten Antriebsstrang und/oder dem Abtriebsstrang vermieden werden. Diese Schwingungen entstehen insbesondere dann, wenn das Drehmoment an dem ersten und/oder zweiten Antriebsstrang und/oder dem Abtriebsstrang während des Umkoppelns variiert, insbesondere auf Null absinkt.

Eine Weiterbildung der Erfindung sieht vor, dass das Schließen der Kupplung in Abhängigkeit von einer thermischen Belastung und/oder einem Verschleiß der entsprechenden Kupplung erfolgt. Um eine Beschädigung der ersten und/oder der zweiten Kupplung zu vermeiden, ist es vorgesehen, das Schließen nur dann vorzunehmen, wenn die thermische Belastung und/oder der Verschleiß der entsprechenden Kupplung dies zulässt. Es kann beispielsweise vorgesehen sein, eine Temperatur der ersten und/oder der zweiten Kupplung und/oder den Verschleiß der entsprechenden Kupplung zu bestimmen. Die Temperatur beschreibt dabei die thermische Belastung. Wird festgestellt, dass die thermische Belastung und/oder der Verschleiß der entsprechenden Kupplung zu hoch ist, insbesondere über einem definierten Grenzwert liegt/liegen, so wird das durch das teilweise Schließen der ersten und/oder zweiten Kupplung von dem weiteren Antriebsaggregat bereitgestellte Ersatzmoment verringert. Es kann auch vorgesehen sein, die erste und/oder die zweite Kupplung vollständig zu schließen und das Ersatzmoment mit dem weiteren Antriebsaggregat mittels Motorbremsen, Motorstaubremsen und/oder Dekompressionsbremsen oder weiteren geeigneten Maßnahmen zu erzeugen, um die Belastung der entsprechenden Kupplung zu verringern.

Eine Weiterbildung der Erfindung sieht vor, dass das Doppelgetriebe und die erste und die zweite Kupplung ein Doppelkupplungsgetriebe bilden. Es ist also vorgesehen, dass das Doppelgetriebe und die erste und die zweite Kupplung eine Baueinheit, das Doppelkupplungsgetriebe, ausbilden.

Die Erfindung umfasst ferner eine Hybridantriebsvorrichtung eines Kraftfahrzeugs, insbesondere zur Durchführung des Verfahrens gemäß den vorstehenden Ausführungen, mit zumindest zwei unterschiedlichen Antriebsaggregaten, insbesondere einer elektrischen Maschine und einer Brennkraftmaschine, die mit wenigstens zwei Antriebssträngen des Kraftfahrzeugs verbindbar sind. Dabei ist vorgesehen, dass während eines Umkoppelns eines der Antriebsaggregate, insbesondere von einem ersten auf einen zweiten der Antriebsstränge oder von dem zweiten auf den ersten Antriebsstrang, und/oder während einer Synchronisation ein dem von dem einen Antriebsaggregat erzeugten Moment im Wesentlichen entsprechendes Ersatzmoment durch zumindest teilweises Schließen einer Kupplung von einem weiteren der Antriebsaggregate bereitgestellt wird. Dabei ist beispielsweise ein Doppelgetriebe mit einem ersten und einem zweiten Antriebsstrang und einem dem Antrieb des Kraftfahrzeugs dienenden Abtriebsstrang vorgesehen, wobei eines der Antriebsaggregate an den ersten oder den zweiten Antriebsstrang koppelbar ist und das weiteres Antriebsaggregat über eine erste Kupplung mit dem ersten Antriebsstrang oder über eine zweite Kupplung mit dem zweiten Antriebsstrang verbindbar ist. Der Abtriebsstrang dient in diesem Fall dem Antrieb des Kraftfahrzeugs, das heißt, dass ein an dem Abtriebsstrang anliegendes Drehmoment an Räder des Kraftfahrzeugs weitergeleitet wird. Es kann vorgesehen sein, dass während des Umkoppelns und/oder Synchronisierens des einen Antriebsaggregats die erste und/oder zweite Kupplung zumindest teilweises geschlossen wird. Das eine Antriebsaggregat kann dabei mittels einer Kupplungsvorrichtung, beispielsweise einer Klauenkupplung, wahlweise mit dem ersten oder dem zweiten Antriebsstrang verbindbar sein.

Die Erfindung umfasst ferner ein elektronisches Steuergerät, insbesondere zur Durchführung des Verfahrens gemäß den vorstehenden Ausführungen, zur Steuerung einer Hybridantriebsvorrichtung, insbesondere gemäß den vorstehenden Ausführungen, mit zumindest zwei unterschiedlichen Antriebsaggregaten, insbesondere einer elektrischen Maschine und einer Brennkraftmaschine, die mit wenigstens zwei Antriebssträngen des Kraftfahrzeugs verbindbar sind. Es ist vorgesehen, dass mittels des Steuergeräts während eines Umkoppelns eines der Antriebsaggregate, insbesondere von einem ersten auf einen zweiten der Antriebsstränge oder von dem zweiten auf den ersten Antriebsstrang, und/oder während einer Synchronisation ein von einem weiteren der Antriebsaggregate erzeugtes Ersatzmoment im Wesentlichen dem von dem einen Antriebsaggregat erzeugten Moment entsprechend durch zumindest teilweises Schließen einer Kupplung einstellbar ist. Das Steuergerät kann also Mittel zur Bestimmung des von dem einen Antriebsaggregat erzeugten Moments, zur Steuerung und/oder Regelung des einen und/oder weiteren Antriebsaggregats sowie zum Einstellen der Kupplung. Das Steuergerät ist vorzugsweise zur Steuerung und/oder Regelung der Hybridantriebsvorrichtung vorgesehen.

### Kurze Beschreibung der Zeichnungen

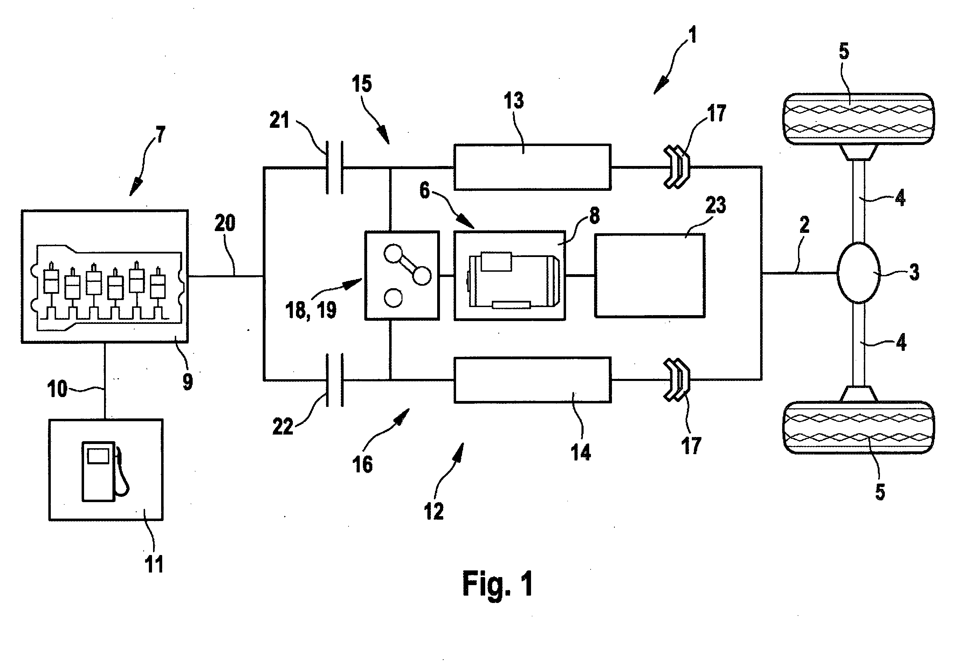

Die Erfindung wird im Folgenden anhand der in der Zeichnung dargestellten Ausführungsbeispiele näher erläutert, ohne dass eine Beschränkung der Erfindung erfolgt. Es zeigt die
- Figur: eine Hybridantriebsvorrichtung eines Kraftfahrzeugs mit zwei unterschiedlichen Antriebsaggregaten und einem Doppelgetriebe.

### Ausführungsform(en) der Erfindung

Die Figur zeigt eine Hybridantriebsvorrichtung 1 eines nicht dargestellten Kraftfahrzeugs. Die Hybridantriebsvorrichtung 1 treibt über einen Abtriebsstrang 2 und ein Differenzialgetriebe 3 zwei Wellen 4 an, auf welchen Räder 5 des Kraftfahrzeugs angeordnet sind. Die Hybridantriebsvorrichtung 1 weist ein Antriebsaggregat 6 und ein weiteres Antriebsaggregat 7 auf. Das Antriebsaggregat 6 ist eine elektrische Maschine 8, das Antriebsaggregat 7 eine Brennkraftmaschine 9. Die Brennkraftmaschine 9 ist über eine Zuleitung 10 mit einem Brennstofftank 11 verbunden, aus welchem Brennstoff zu der Brennkraftmaschine 9 gelangen kann. Außerdem weist die Hybridantriebsvorrichtung 1 ein Doppelgetriebe 12 auf, welches sich aus einem ersten Teilgetriebe 13 und einem zweiten Teilgetriebe 14 zusammensetzt. Das erste Teilgetriebe 13 weist einen ersten Antriebsstrang 15 und das zweite Teilgetriebe 14 einen zweiten Antriebsstrang 16 auf. Die Teilgetriebe 13 und 14 weisen jeweils unterschiedliche Übersetzungen auf. Beispielsweise kann das erste Teilgetriebe 13 Übersetzungen aufweisen, die für die Gänge 1, 3, 5, 7 sowie den Rückwärtsgang des Kraftfahrzeugs benötigt werden, während das zweite Teilgetriebe 14 Übersetzungen für die Gänge 2, 4 und 6 aufweist. Das bedeutet, dass vorzugsweise die nächst höhere Übersetzung jeweils auf dem anderen Teilgetriebe vorgesehen ist. Auf der den Antriebssträngen 15 und 16 abgewandten Seiten der Teilgetriebe 13 und 14 findet eine Übertragung des Drehmoments von den Teilgetrieben 13 und 14 auf den Abtriebsstrang 2 statt. Das bedeutet, dass der erste und der zweite Antriebsstrang 15 und 16 nach einer Übersetzung in dem ersten oder zweiten Teilgetriebe 13 und 14 zusammengeführt werden. Um Beschädigungen durch eventuell vorliegende unterschiedliche Drehzahlen zu vermeiden, solite an beiden Antriebsstränge 15 und 16 ein Moment anliegen, ist in dem ersten Antriebsstrang 15 und dem zweiten Antriebsstrang 16 jeweils eine Rutschkupplung 17 vorgesehen. Die elektrische Maschine 8 ist über eine Kupplung 18, die als Klauenkupplung 19 ausgeführt ist, entweder mit dem ersten Antriebsstrang 15 oder mit dem zweiten Antriebsstrang 16 koppelbar. Das bedeutet, dass ein von der elektrischen Maschine 8 erzeugtes Drehmoment entweder an den ersten Antriebsstrang 15 oder an den zweiten Antriebsstrang 16 geleitet wird. Für diesen Zweck ist die Klauenkupplung 19 ansteuerbar, sodass entweder eine Verbindung zu dem ersten Antriebsstrang 15 oder dem zweiten Antriebsstrang 16 vorliegt. Ein Abtriebsstrang 20 der Brennkraftmaschine 9 ist über eine erste Kupplung 21 mit dem ersten Antriebsstrang 15 und über eine zweite Kupplung 22 mit dem zweiten Antriebsstrang 16 verbindbar. Das bedeutet, das ein von der Brennkraftmaschine 9 erzeugtes Moment üblicherweise entweder über die erste Kupplung in den ersten Antriebsstrang 15 oder über die zweite Kupplung 22 in den zweiten Antriebsstrang 16 eingeleitet wird. Eine Einleitung des Moments erfolgt, wenn die jeweilige Kupplung 21 oder 22 geschlossen ist. Sind die Kupplungen 21 und 22 geöffnet, findet keine Momenteinleitung statt. Sollten die Kupplungen 21 und 22 gleichzeitig geschlossen sein, so werden die Rutschkupplungen 17 aktiviert, sodass eine Beschädigung des Doppelgetriebes 12 und/oder der Kupplungen 21 und 22 vermieden werden kann. Die elektrische Maschine 8 kann entweder in einem Antriebs- oder einem Generatormodus betrieben werden. Alternativ kann die Klauenkupplung 19 sowohl von dem ersten Antriebsstrang 15 als auch dem zweiten Antriebsstrang 16 entkoppelt werden und die elektrische Maschine 8 stillstehen. Befindet sich die elektrische Maschine 8 in dem Generatormodus, so wird aus der Bewegungsenergie des Kraftfahrzeugs beziehungsweise zumindest einem Teil einer Antriebsleistung der Brennkraftmaschine 9 elektrische Energie erzeugt. Diese kann über eine Wandlereinrichtung 23 in ein Bordnetz des Kraftfahrzeugs eingespeist beziehungsweise zur späteren Verwendung in einem Akkumulator gespeichert werden. Nicht dargestellt ist ein elektronisches Steuergerät, mit welchem die elektrische Maschine 8, die Brennkraftmaschine 9, die erste Kupplung 21, die zweite Kupplung 22 und/oder die Klauenkupplung 19 ansteuerbar sein können.

Es ergibt sich folgende Funktion der Hybridantriebsvorrichtung 1, wobei beispielhaft im Folgenden ein Verzögerungsvorgang des Kraftfahrzeugs herangezogen und beschrieben wird: Während diesem ist die Brennkraftmaschine 9 abgeschaltet, befindet sich also im Stillstand. Die Kupplungen 21 und 22 sind daher geöffnet. Die elektrische Maschine 8 ist über die Klauenkupplung 19 mit dem ersten Antriebsstrang 15, das heißt dem ersten Teilgetriebe 13 verbunden. Das erste Teilgetriebe 13 weist beispielsweise eine Übersetzung auf, die einem dritten Gang des Kraftfahrzeugs entspricht. Beim Verzögern des Kraftfahrzeugs befindet sich die Hybridantriebsvorrichtung 1 in einem Rekuperationsmodus, das heißt, dass die elektrische Maschine 8 als Generator betrieben wird und somit ein Bremsmoment erzeugt. Dabei erzeugt die elektrische Maschine 8 elektrische Energie, die über die Wandlereinrichtung 23 dem Bordnetz des Kraftfahrzeugs zur Verfügung gestellt wird. Über das Doppelgetriebe 12 beziehungsweise das erste Teilgetriebe 13 wirkt das Bremsmoment auf den Abtriebsstrang 2 und damit auf die Räder 5 des Kraftfahrzeugs. Das Kraftfahrzeug wird damit abgebremst. Gleichzeitig sinkt die Drehzahl sowohl des Abtriebsstrangs 2 als auch der Antriebsstränge 15 und 16. Da es das Ziel ist, die elektrische Maschine 8 stets in einem optimalen Drehzahlbereich, entsprechend einem Bereich, in welchem ein hoher Wirkungsgrad vorliegt, zu betreiben, ist es also ab einer gewissen Drehzahlverringerung notwendig, die Übersetzung des Doppelgetriebes 12 so zu ändern, dass die elektrische Maschine 8 trotz der geringer werdenden Drehzahl des Abtriebsstrangs 2 auf einem höheren Drehzahlniveau betrieben werden kann. Zu diesem Zweck wird das zweite Teilgetriebe 14 so vorbereitet, dass hier eine Übersetzung eingestellt wird, die kürzer ist als die momentan eingestellte Übersetzung des ersten Teilgetriebes 13. Anschließend wird über die Klauenkupplung 19 die elektrische Maschine 8 von dem ersten Antriebsstrang 15 und damit dem ersten Teilgetriebe 13 getrennt und mit dem zweiten Antriebsstrang beziehungsweise dem zweiten Teilgetriebe 14 verbunden. Da nun eine kürzere Übersetzung vorliegt, kann die elektrische Maschine 8 wieder in ihrem optimalen Drehzahlbereich betrieben werden. Während des Umkoppelns der elektrischen Maschine 8 von dem ersten Antriebsstrang 15 auf den zweiten Antriebsstrang 16 mittels der Klauenkupplung 19 kommt es, bedingt durch die Unterbrechung des durch die elektrische Maschine 8 erzeugten Verzögerungsmoments, zu einem Ausfall der Verzögerungswirkung des Kraftfahrzeugs. Das Bremsmoment, welches von der elektrischen Maschine 8 erzeugt wird, wird solange nicht an den Abtriebsstrang 2 weitergeieitet, wie die Klauenkupplung 19 braucht, um die Verbindung von dem ersten Antriebsstrang 15 zu lösen und eine Verbindung zu dem zweiten Antriebsstrang 16 herzustellen. Dieses Ausbleiben des Verzögerungsmoments kann einen Komfort eines Fahrers des Kraftfahrzeugs verringern. Aus diesem Grund ist es vorgesehen, während des Umkoppelns der elektrischen Maschine 8 von dem ersten Antriebsstrang 15 auf den zweiten Antriebsstrang 16 beziehungsweise von dem zweiten Antriebsstrang 16 auf den ersten Antriebsstrang 15 ein Ersatzmoment zu erzeugen, welches dem von der elektrischen Maschine 8 erzeugten Moment im Wesentlichen entspricht. Dieses Ersatzmoment wird durch zumindest teilweises Schließen der ersten Kupplung 21 und/oder der zweiten Kupplung 22 bereitsgestellt. Da sich die Brennkraftmaschine 9, wie beschrieben, im Stillstand befindet, wird durch das zumindest teilweise Schließen der Kupplungen 21 oder 22 ein Bremsmoment erzeugt. Je nach gewünschter Höhe des Ersatzmoments kann es dabei vorkommen, dass die Brennkraftmaschine 9 mitgedreht wird, sich also in einem Schleppbetrieb befindet. In diesem Fall wird das Bremsmoment beispielsweise durch die Reibungskräfte innerhalb der Brennkraftmaschine 9 erzeugt. Ist das benötigte Bremsmoment groß, so ist es auch vorstellbar, dass die Brennkraftmaschine 9 das Ersatzmoment mittels Motorstaubremsen und/oder Dekompressionsbremsen erzeugt. In diesem Fall kann die erste Kupplung 21 oder die zweite Kupplung 22 vollständig geschlossen sein. Ist das benötigte Ersatzmoment so gering, dass ein Mitdrehen der Brennkraftmaschine 9 nicht vorliegt, so kann das Ersatzmoment über teilweises Schließen der ersten Kupplung 21 oder der zweiten Kupplung 22 eingestellt werden. Das bedeutet, dass das Ersatzmoment umso größer ausfällt, je weiter die Kupplung 21 oder 22 geschlossen ist. Das zumindest teilweise Schließen der ersten Kupplung 21 beziehungsweise der zweiten Kupplung 22 wird solange durchgeführt, bis die Klauenkupplung 19 eine Verbindung der elektrischen Maschine 8 mit dem ersten Antriebsstrang 15 oder dem zweiten Antriebsstrang 16 hergestellt hat. Idealerweise steuert das Steuergerät die elektrische Maschine 8, die Brennkraftmaschine 9, die Klauenkupplung 19 und die Kupplungen 21 und 22 derart, dass das Ersatzmoment zu jedem Zeitpunkt dem von der elektrischen Maschine 8 erzeugten Moment entspricht und der Fahrer des Kraftfahrzeugs damit kein Ausbleiben des Bremsmoments feststellt.

Weiter kann es vorgesehen sein, beide Kupplungen 21 und 22 im Schlupfbetrieb zu betreiben, um den Energieeintrag und somit den Verschleiß jeder einzelnen Kupplung 21, 22 zu minimieren.

Das beschriebene Verfahren kann auch bei einem Doppel(rück)schalten angewandt werden. In diesem Fall muss das Antriebsaggregat 6, also die elektrische Maschine 8, zwar nicht umgekoppelt werden, kann aber während der für das Schalten erforderlichen Drehzahlangleichung (Synchronisation) ebenfalls kein Moment in den Antriebsstrang 15 oder 16 einleiten. In diesem Fall ist es zweckmäßig, auf dem anderen Teilgetriebe 13 oder 14 einen möglichst kleinen Gang zu wählen, so dass zum Erzielen eines großen Moments am Rad 5 ein geringes Kupplungsmoment ausreicht, was ebenfalls den Verschleiß der Kupplung reduziert.

Zusätzlich kann es vorgesehen sein, eine Belastung und/oder einen Verschleiß der ersten Kupplung 21 und/oder der zweiten Kupplung 22 festzustellen und diese dementsprechend anzusteuern. Beispielsweise kann es bei einer hohen Belastung und/oder einem hohen Verschleiß, beziehungsweise einer Belastung und/oder einem Verschleiß über einem Grenzwert, vorgesehen sein, dass die Kupplungen 21 und 22 weniger weit geschlossen werden und somit das Ersatzmoment kleiner ist als das von der elektrischen Maschine 8 erzeugte Moment.

Alternativ kann die vorstehend beschriebene Vorgehensweise auch bei einer Beschleunigung des Kraftfahrzeugs mittels der elektrischen Maschine 8 angewandt werden. In diesem Fall muss sich die Brennkraftmaschine 9 in einem Betriebszustand befinden. Während eines Umschaltens der Klauenkupplung 19 kann die Brennkraftmaschine 9 beispielsweise kurzzeitig an einem Betriebspunkt betrieben werden, welcher notwendig ist, um ein stetiges Vortriebsmoment zu gewährleisten und über ein Schließen der Kupplung 21 oder 22 ein Vortriebsmoment bereitgestellt werden.

## Patentansprüche

1. Verfahren zum Betreiben einer Hybridantriebsvorrichtung (1) eines Kraftfahrzeugs, die zumindest zwei unterschiedliche Antriebsaggregate (6,7) aufweist, die mit wenigstens zwei Antriebssträngen (15,16) des Kraftfahrzeugs verbindbar sind, wobei als eines der Antriebsaggregate (6,7) eine elektrische Maschine (8) verwendet wird, wobei während eines Umkoppelns der elektrischen Maschine (8) von einem ersten auf einen zweiten der Antriebsstränge (15,16) mittels einer Klauenkupplung (19) und/oder während eines Schaltvorgangs ein dem von der elektrischen Maschine (8) erzeugten Moment im Wesentlichen entsprechendes Ersatzmoment durch zumindest teilweises Schließen einer Kupplung (21,22) von einem weiteren der Antriebsaggregate (7,6) bereitgestellt wird.

2. Verfahren nach Anspruch 1, **dadurch gekennzeichnet, dass** die elektrische Maschine (8) dem ersten der Antriebsstränge (15,16) und das weitere der Antriebsaggregate (7,6) dem weiteren der Antriebsstränge (16,15) zugeordnet wird.

3. Verfahren nach einem oder mehreren der vorhergehenden Ansprüche, **dadurch gekennzeichnet, dass** das weitere der Antriebsaggregate (6,7) über eine erste Kupplung (21) mit dem ersten der Antriebsstränge (15,16) oder über eine zweite Kupplung (22) mit dem zweiten der Antriebsstränge (16,15) verbindbar ist, wobei das Ersatzmoment durch zumindest teilweises Schließen der ersten und/oder zweiten Kupplung (21,22) bereitgestellt wird.

4. Verfahren nach Anspruch 1, **dadurch gekennzeichnet, dass** es während eines Verzögerns des Kraftfahrzeugs mittels eines durch das eine der Antriebsaggregate (6,7) erzeugten Bremsmoments eingesetzt wird, wodurch das Moment dem Bremsmoment und das dem Moment entsprechende Ersatzmoment einem Ersatzbremsmoment entspricht.

5. Verfahren nach einem oder mehreren der vorhergehenden Ansprüche, **dadurch gekennzeichnet, dass** das weitere der Antriebsaggregate (7,6) das Ersatzbremsmoment mittels Motorbremsen, Motorstaubremsen oder Dekompressionsbremsen erzeugt.

6. Verfahren nach einem oder mehreren der vorhergehenden Ansprüche, **dadurch gekennzeichnet, dass** das Ersatzmoment über das teilweise Schließen der ersten und/oder zweiten Kupplung (21,22) und vorzugsweise durch Ansteuerung des weiteren der Antriebsaggregate (7,6) eingestellt wird.

7. Verfahren nach einem oder mehreren der vorhergehenden Ansprüche, **dadurch gekennzeichnet, dass** die elektrische Maschine (8) zum Erzeugen des Bremsmoments als Generator betrieben wird.

8. Verfahren nach einem oder mehreren der vorhergehenden Ansprüche, **dadurch gekennzeichnet, dass** ein an dem ersten und/oder zweiten der Antriebsstränge (15,16) und/oder an dem Abtriebsstrang (2) anliegendes Drehmoment während des Umkoppelns stets ein Bremsmoment oder ein Vortriebsmoment darstellt.

9. Verfahren nach einem oder mehreren der vorhergehenden Ansprüche, **dadurch gekennzeichnet, dass** das Schließen der Kupplung (21,22) in Abhängigkeit von einer thermischen Belastung und/oder einem Verschleiß der entsprechenden Kupplung (21,22) erfolgt.

10. Hybridantriebsvorrichtung (1) eines Kraftfahrzeugs, insbesondere zur Durchführung des Verfahrens nach einem oder mehreren der vorhergehenden Ansprüche, mit zumindest zwei unterschiedlichen Antriebsaggregaten (6,7), die mit wenigstens zwei Antriebssträngen (15,16) des Kraftfahrzeugs verbindbar sind, wobei eines der Antriebsaggregate (6,7) eine elektrische Maschine (8) ist, **dadurch gekennzeichnet, dass** während eines Umkoppelns der elektrischen Maschine (8) von einem ersten auf einen zweiten der Antriebsstränge (15,16) mittels einer Klauenkupplung (19) und/oder während eines Schaltvorgangs ein dem von der elektrischen Maschine (8) erzeugten Moment im Wesentlichen entsprechendes Ersatzmoment durch zumindest teilweises Schließen einer Kupplung (21,22) von einem weiteren der Antriebsaggregate (7,6) bereitgestellt wird.

11. Hybridantriebsvorrichtung nach Anspruch 10, **gekennzeichnet durch** ein Doppelgetriebe (12), welches den ersten und den zweiten der Antriebsstränge (15,16) und einen dem Antrieb des Kraftfahrzeugs dienenden Abtriebsstrang (2) aufweist.

12. Hybridantriebsvorrichtung nach einem oder mehreren der vorhergehenden Ansprüche, **dadurch gekennzeichnet, dass** die elektrische Maschine (8) mittels der Klauenkupplung (19) an den ersten oder den zweiten der Antriebssträge (15,16) koppelbar ist.

13. Hybridantriebsvorrichtung nach einem oder mehreren der vorhergehenden Ansprüche, **dadurch gekennzeichnet, dass** das Doppelgetriebe (12) und die erste und die zweite Kupplung (21,22) ein Doppelkupplungsgetriebe bilden.

14. Elektronisches Steuergerät, insbesondere zur Durchführung des Verfahrens nach einem oder mehreren der Ansprüche 1 bis 9, zur Steuerung einer Hybridantriebsvorrichtung (1), insbesondere nach Anspruch 10, eines Kraftfahrzeugs, mit zumindest zwei unterschiedlichen Antriebsaggregaten (6,7), die mit wenigstens zwei Antriebssträngen (15,16) des Kraftfahrzeugs verbindbar sind, wobei eines der Antriebsaggregate (6,7) eine elektrische Maschine (18) ist, wobei mittels des Steuergeräts während eines Umkoppelns der elektrischen Maschine (8) von einem ersten auf einen zweiten der Antriebsstränge (15,16) mittels einer Klauenkupplung (19) und/oderwährend eines Schaltvorgangs ein von einem weiteren der Antriebsaggregate (7,6) erzeugtes Ersatzmoment im Wesentlichen dem von der elektrischen Maschine (8) erzeugten Moment entsprechend durch zumindest teilweises Schließen einer Kupplung (21,22) eingestellt wird.

## Claims

1. Method for operating a hybrid drive device (1) of a motor vehicle, which hybrid drive device (1) has at least two different drive units (6, 7) which can be connected to at least two drive trains (15, 16) of the motor vehicle, wherein an electric machine (8) is used as one of the drive units (6, 7), wherein during the switching of the connection of the electric machine (8) from a first to a second of the drive trains (15, 16) by means of a dog clutch (19) and/or during a gear shifting process an equivalent torque, which substantially corresponds to the torque generated by the electric machine (8), is made available by at least partial closure of a clutch (21, 22) by another of the drive units (7, 6).

2. Method according to Claim 1, **characterized in that** the electric machine (8) is assigned to the first of the drive trains (15, 16), and the other of the drive units (7, 6) is assigned to the other of the drive trains (16, 15).

3. Method according to one or more of the preceding claims, **characterized in that** the other of the drive units (6, 7) can be connected to the first of the drive trains (15, 16) via a first clutch (21) or to the second of the drive trains (16, 15) via a second clutch (22), wherein the equivalent torque is made available by at least partial closure of the first and/or second clutch (21, 22).

4. Method according to Claim 1, **characterized in that** said method is used during deceleration of the motor vehicle by means of a braking torque generated by one of the drive units (6, 7), as a result of which the torque corresponds to the braking torque, and the equivalent torque, corresponding to the torque, corresponds to an equivalent braking torque.

5. Method according to one or more of the preceding claims, **characterized in that** the other of the drive units (7, 6) generates the equivalent braking torque by means of engine brakes, exhaust brakes or decompression brakes.

6. Method according to one or more of the preceding claims, **characterized in that** the equivalent torque is set by partially closing the first and/or second clutch (21, 22), and preferably by actuating the other of the drive units (7, 6).

7. Method according to one or more of the preceding claims, **characterized in that** the electric machine (8) is operated as a generator in order to generate the braking torque.

8. Method according to one or more of the preceding claims, **characterized in that** a torque which is present at the first and/or second of the drive trains (15, 16) and/or at the output train (2) always constitutes a braking torque or a propulsion torque during the switching over of the connection.

9. Method according to one or more of the preceding claims, **characterized in that** the closure of the clutch (21, 22) takes place as a function of thermal loading and/or wear of the corresponding clutch (21, 22).

10. Hybrid drive device (1) of a motor vehicle, in particular for carrying out the method according to one or more of the preceding claims, having at least two different drive units (6, 7) which can be connected to at least two drive trains (15, 16) of the motor vehicle, wherein one of the drive units (6, 7) is an electric machine (8), **characterized in that** during the switching over of the connection of the electric machine (8) from a first to a second of the drive trains (15, 16) by means of a dog clutch (19) and/or during a gear shifting process an equivalent torque, which substantially corresponds to the torque generated by the electric machine (8), is made available by at least partial closure of a clutch (21, 22) by another of the drive units (7, 6).

11. Hybrid drive device according to Claim 10, **characterized by** a double transmission (12) which has the first and the second drive trains (15, 16) and an output train (2) which serves to drive the motor vehicle.

12. Hybrid drive device according to one or more of the preceding claims, **characterized in that** the electric machine (8) can be coupled to the first or the second drive train (15, 16) by means of the dog clutch (19).

13. Hybrid drive device according to one or more of the preceding claims, **characterized in that** the double transmission (12) and the first and the second clutch (21, 22) form a double clutch transmission.

14. Electronic controller, in particular for carrying out the method according to one or more of Claims 1 to 9, for controlling a hybrid drive device (1), in particular according to Claim 10, of a motor vehicle having at least two different drive units (6, 7) which can be connected to at least two drive trains (15, 16) of the motor vehicle, wherein one of the drive units (6, 7) is an electric machine (18), wherein during the switching over of the connection of the electric machine (8) from a first to a second of the drive trains (15, 16) by means of a dog clutch (19) and/or during a gear shifting process an equivalent torque, which is generated by another of the drive units (7, 6), is set by means of the controller such that it substantially corresponds to the torque generated by the electric machine (8), by at least partial closure of a clutch (21, 22).

## Revendications

1. Procédé de fonctionnement d'un dispositif d'entraînement hybride (1) d'un véhicule automobile, qui présente au moins deux groupes motopropulseurs différents (6, 7), lesquels peuvent être connectés à au moins deux transmissions (15, 16) du véhicule automobile, une machine électrique (8) étant utilisée en tant que l'un des groupes motopropulseurs (6, 7), dans lequel procédé, pendant une commutation de la machine électrique (8) d'une première à une deuxième des transmissions (15, 16) au moyen d'un embrayage à griffes (19) et/ou pendant une opération de changement de vitesses, un couple de rechange correspondant essentiellement au couple produit par la machine électrique (8) est fourni par la fermeture au moins partielle d'un embrayage (21, 22) d'un autre des groupes motopropulseurs (7, 6).

2. Procédé selon la revendication 1, **caractérisé en ce que** la machine électrique (8) est associée à la première des transmissions (15, 16) et l'autre des groupes motopropulseurs (7, 6) est associé à l'autre des transmissions (16, 15).

3. Procédé selon l'une quelconque ou plusieurs des revendications précédentes, **caractérisé en ce que** l'autre des groupes motopropulseurs (6, 7) peut être connecté par le biais d'un premier embrayage (21) à la première des transmissions (15, 16) ou par le biais d'un deuxième embrayage (22) à la deuxième des transmissions (16, 15), le couple de rechange étant fourni par la fermeture au moins partielle du premier et/ou du deuxième embrayage (21, 22).

4. Procédé selon la revendication 1, **caractérisé en ce qu'**il est utilisé pendant une décélération du véhicule automobile au moyen d'un couple de freinage produit par l'un des groupes motopropulseurs (6, 7), de sorte que le couple corresponde au couple de freinage et que le couple de rechange correspondant au couple corresponde à un couple de freinage de rechange.

5. Procédé selon l'une quelconque ou plusieurs des revendications précédentes, **caractérisé en ce que** l'autre des groupes motopropulseurs (7, 6) produit le couple de freinage de rechange au moyen de freins moteurs, de freins dynamiques moteurs ou de freins de décompression.

6. Procédé selon l'une quelconque ou plusieurs des revendications précédentes, **caractérisé en ce que** le couple de rechange est ajusté par le biais de la fermeture partielle du premier et/ou du deuxième embrayage (21, 22) et de préférence par commande de l'autre des groupes motopropulseurs (7, 6).

7. Procédé selon l'une quelconque ou plusieurs des revendications précédentes, **caractérisé en ce que** la machine électrique (8) est utilisée en tant que générateur pour produire le couple de freinage.

8. Procédé selon l'une quelconque ou plusieurs des revendications précédentes, **caractérisé en ce qu'**un couple de rotation appliqué à la première et/ou à la deuxième des transmissions (15, 16) et/ou à la transmission de sortie (2) pendant la commutation est toujours constitué par un couple de freinage ou un couple d'avancement.

9. Procédé selon l'une quelconque ou plusieurs des revendications précédentes, **caractérisé en ce que** la fermeture de l'embrayage (21, 22) s'effectue en fonction d'une contrainte thermique et/ou d'une usure de l'embrayage correspondant (21, 22).

10. Dispositif d'entraînement hybride (1) d'un véhicule automobile, en particulier pour mettre en oeuvre le procédé selon l'une quelconque ou plusieurs des revendications précédentes, comprenant au moins deux groupes motopropulseurs différents (6, 7), lesquels peuvent être connectés à au moins deux transmissions (15, 16) du véhicule automobile, l'un des groupes motopropulseurs (6, 7) étant une machine électrique (8), **caractérisé en ce que** pendant une commutation de la machine électrique (8) d'une première à une deuxième des transmissions (15, 16) au moyen d'un embrayage à griffes (19) et/ou pendant une opération de changement de vitesses, un couple de rechange correspondant essentiellement au couple produit par la machine électrique (8) est fourni par la fermeture au moins partielle d'un embrayage (21, 22) d'un autre des groupes motopropulseurs (7, 6).

11. Dispositif d'entraînement hybride selon la revendication 10, **caractérisé par** une double boîte de vitesses (12) qui présente la première et la deuxième des transmissions (15, 16) et une transmission de sortie (2) servant à l'entraînement du véhicule automobile.

12. Dispositif d'entraînement hybride selon l'une quelconque ou plusieurs des revendications précédentes, **caractérisé en ce que** la machine électrique (8) peut être accouplée au moyen de l'embrayage à griffes (19) à la première ou à la deuxième des transmissions (15, 16).

13. Dispositif d'entraînement hybride selon l'une quelconque ou plusieurs des revendications précédentes, **caractérisé en ce que** la double boîte de vitesses (12) et le premier et le deuxième embrayage (21, 22) forment une boîte de vitesses à double embrayage.

14. Appareil de commande électronique, en particulier pour mettre en oeuvre le procédé selon l'une quelconque ou plusieurs des revendications 1 à 9, pour commander un dispositif d'entraînement hybride (1), en particulier selon la revendication 10, d'un véhicule automobile, comprenant au moins deux groupes motopropulseurs différents (6, 7), lesquels peuvent être connectés à au moins deux transmissions (15, 16) du véhicule automobile, l'un des groupes motopropulseurs (6, 7) étant une machine électrique (18), dans lequel procédé, au moyen de l'appareil de commande, pendant une commutation de la machine électrique (8) d'une première à une deuxième des transmissions (15, 16) au moyen d'un embrayage à griffes (19) et/ou pendant une opération de changement de vitesses, un couple de rechange produit par un autre des groupes motopropulseurs (7, 6) correspondant essentiellement au couple produit par la machine électrique (8) étant ajusté par la fermeture au moins partielle d'un embrayage (21, 22).
